Europäisches Patentamt

(19) European Patent Office    (11) Publication number: **0 199 472**
Office européen des brevets    **B1**

(12) **EUROPEAN PATENT SPECIFICATION**

(45) Date of publication of patent specification: **07.02.90**    (51) Int. Cl.⁵: **A 41 D 13/00, A 41 D 27/24**

(21) Application number: **86302318.0**

(22) Date of filing: **27.03.86**

(54) **Protective garment.**

(30) Priority: **01.04.85 US 718791**
**17.10.85 US 788321**

(43) Date of publication of application:
**29.10.86 Bulletin 86/44**

(45) Publication of the grant of the patent:
**07.02.90 Bulletin 90/06**

(84) Designated Contracting States:
**DE FR GB**

(56) References cited:
**EP-A-0 082 885**
**US-A-3 725 189**
**US-A-4 190 010**
**US-A-4 272 851**
**US-A-4 303 712**

(73) Proprietor: **Kappler Limited**
**Kappler House Mile End Road**
**Colwick Nottingham NG4 2BN (GB)**

(72) Inventor: **Langley, John D.**
**c/o Kappler, Inc. P.O. Box 218**
**Gunterville Alabama 35976 (US)**

(74) Representative: **Coxon, Philip et al**
**Eric Potter & Clarkson 14 Oxford Street**
**Nottingham NG1 5BP (GB)**

Courier Press, Leamington Spa, England.

## Description

This invention relates generally to hazardous environmental suits used to protect workers in contaminated areas, and particularly to a throw-away type such suit.

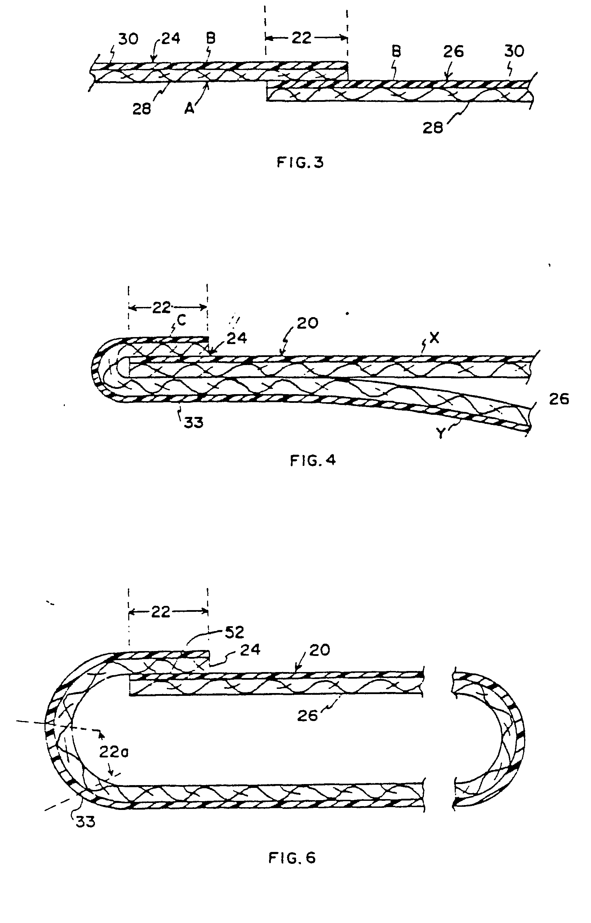

Goldstein U.S. patent 4,272,851 discloses a protective suit or garment constructed of a non-woven, spun bonded olefin manufactured under the trademark Tyvek, (a trademark of DuPont de Nemours & Company), which is coated on one side by a polyethylene film. The olefin provides tear resistance, and the film prevents chemical penetration. While the patent does not discuss the arrangement of adjacent surfaces of a seam of two pieces of the material, it is believed implicit that film side-to-film side is employed. First, examining the arrangement in Figure 4, it is noted that each of the two thicknesses are turned 180° to form facing surfaces, thus indicating that identical surfaces are mated. Second, normally, and as illustrated by Bibby U.S. patent 4,190,010, the film, less porous, side of a protective garment (waterproof) forms the outside of such a garment and, three, Tyvek is not directly heat bondable to another layer of Tyvek, this being indicated by its manufacturer.

The Goldstein patent acknowledges the desirability of providing additional seam strength, accomplishing this by the addition of a binding around the external edge region of the seam and securing this region by stitching. The patent asserts that by this technique, since the needle holes are outside of the ultrasonic welded portion, the latter provides an unbroken barrier to the introduction of any contaminant, it being presumed that this means that even if a contaminant would pass through the stitching holes that it could not reach the interior because of the welded portion.

There are, however, two problems with the structure of Goldstein. First, while it is true that there is a seal between the two turned-back layers of material which is inboard of the stitching, there are two unsealed paths on the outside of these sealed layers which extend from the inside of the garment to the stitches. This, of course, can provide a leakage path. Second, even if one can affect a seal of all three surfaces of the material at a weld or welded seam, by the vary mechanical arrangement of the seam, it is particularly vulnerable to stretching forces which can and are frequently applied by natural movements of the wearer of the garment. The stresses are very concentrated, being first on the inside edge of a weld. In view of the small area to which the forces are initially directed, they can readily be hundreds of pounds per square inch just by the manipulation of one's arms, assuming a sleeve member is involved. As will be noted, initially, the sewn seam is not involved, and thus it provides no reinforcing pressure to hold the material together, with the result that with continued stretching forces, the weld is broken back to the point of sewing where sufficient resistance will probably be met to stop the tearing away process. Unfortunately, however, at this point, the seal of the weld no longer exists, and the remaining barrier, a sewn seam, is not liquid-proof.

Accordingly, it is the object of this invention to provide a significantly stronger seam and yet one which does not require sewing.

Accordingly it is the object of the present invention to provide a method of making protective garments or parts thereof from fabric comprising a first layer laminated on one side thereof to a second layer, the first and second layers being bondable together by the application of ultrasonic waves, said method comprising:

a. overlapping edges of pieces of said fabric to be bonded together so that a surface of a first layer of one piece of said fabric is in contact with a surface of a second layer of another piece of said fabric in the area of said overlap; and

b. bonding said pieces of fabric together in the area of the said overlap by applying pressure at spaced intervals and ultrasonic waves continuously whereby the combination of adjacent conditions of applied heat and pressure, and heat only, is effected along said overlap.

According to another aspect of the present invention we provide a protective garment comprising:

body material formed of bonded layers including as a first and inner layer a spun bonded olefin and as a second and outer layer a bondable film from the group of films wherein one film includes polyethylene and the other film includes polyvinylidine chloride;

an inner surface, surface A, of said material being a surface of said spun bonded olefin and the outer surface, surface B, of said material being a surface of said bondable film; and

at least one seam between portions of said body material, said seam being formed by overlapping edge regions of said material, a surface A of one edge region forming a first thickness of material, lying flat against a surface B of another edge region forming a second thickness of material and applying ultrasonic energy through the resulting overlapping edge regions of said first and second thicknesses of material and simultaneously applying pressure to said overlapped edge region, said pressure being applied at predetermined spaced intervals on serially spaced areas along the said overlapped edge region of said material wherein the combination of adjacent conditions of applied heat and pressure, and heat only, is effected in said region and a continuous seal is effected.

Preferably the first layer bonds weakly or is non-bondable to another similar layer by the application of ultrasonic waves, wherein prior to bonding one of said pieces of said fabric is folded around the edge of the other piece of said fabric back past the area of said overlap in such manner that a surface of a layer of the folded portion of the fabric is in contact with a surface of a similar of one of the overlapping pieces of said fabric so that the layers are unbonded or only weakly bonded to one another.

In a preferred embodiment of this invention a protective suit is made of a fabric-film combination, an ideal fabric being Tyvek (a material manufactured and sold under this trademark by DuPont). The seam is made by bringing the two edges of the material together from opposite directions, and necessarily with this approach, the materials are arranged film side-to-Tyvek side. This would not seem an extraordinary approach except for the fact that when one attemps to weld them together in an ordinary technique, such as by a continuous weld seam as employed by Goldstein (but film side-to-film side), the Tyvek appears to effect a migration or change in composition with the result that the welding attempt fails, the material literally coming apart at the point of weld. Perhaps that is the reason that Goldstein stayed with a film-to-film weld, although not an entirely satisfactory one, as he notes. In any event, the applicant has determined that by the combination of a continuous application of ultrasonic heating and spaced application of pressure that a continuous bond is effected, it being both unnecessary and, in fact, undesirable to provide continuous pressure. It appears that the graduations in stresses that inherently occur in between applied areas of pressure create regions of enhanced bonding strength, and at the same time the bonding effected is sufficiently continuous as to prevent leakage.

Reference is now made to the accompanying drawings:

Figure 1 is an elevational view of a protective suit as contemplated by this invention;

Figure 2 is an enlarged cross-sectional view taken along line 2—2 of Figure 1;

Figure 3 is an enlarged partial view of Figure 2;

Figure 4 is an enlarged partial view of a portion of a sleeve as illustrated in Figure 2 but with an added fold of the material;

Figure 5 is a generally diagrammatic illustration of an ultrasonic type welding apparatus as employed in the welding of seams positioned as shown in Figures 2—4;

Figure 5a is an enlarged partial view of a portion of Figure 5;

Figure 6 is an enlarged partial view of the sleeve processed by the welder as shown in Figure 5 and after a folded portion has been pulled away;

Figure 7 is a cross-sectional view showing a modification of a structure of Figure 3 in which a strip has been added; and

Figure 8 is a cross-sectional view showing a modification of Figure 4 in which a strip has been added.

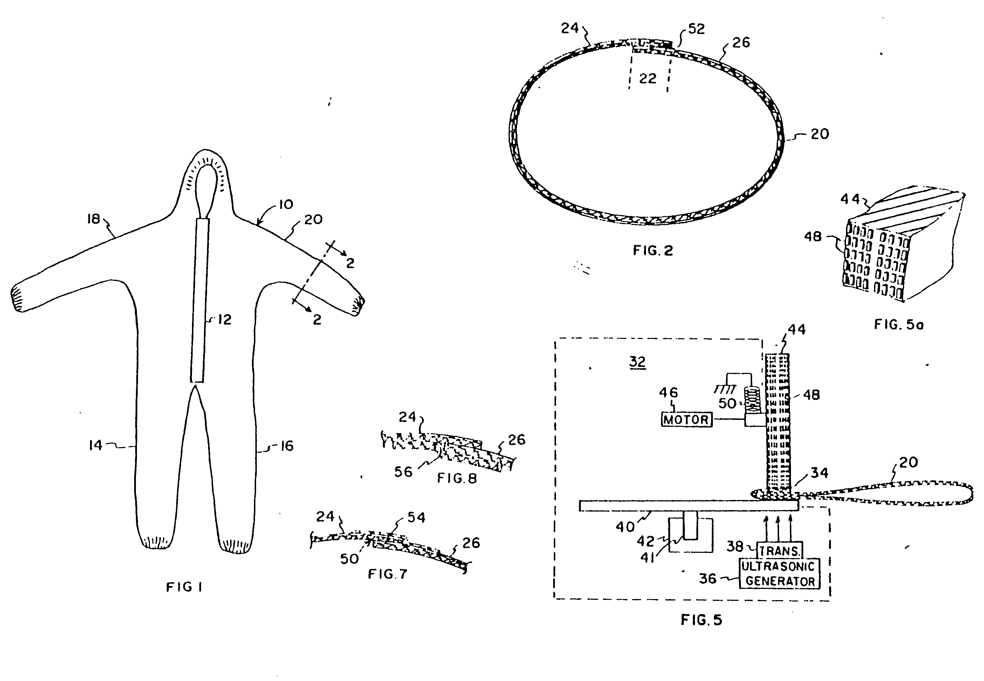

Referring to Figure 1, the present invention generally contemplates the construction of a protective garment or suit 10 having a sealable, zipper-locked opening (not shown) generally covered by a protective flap 12. Suit 10 is constructed of a laminated material having as an inner layer a fabric-type material, such as Tyvek, and as an outer layer a chemical-resistant film, such as a polyethylene or Saranex, (a film manufactured and sold under this trademark by Dow Chemical Company). Significantly, in the construction of such a suit, various seams must be sewn, notably in leg units 14 and 16 and arm units 18 and 20. Obviously, a seam contemplates a break of some character in the continuity of material and where, as in the case of a protective garment, there must be no loss in the protective cover, or insignificantly so, tha seam must be near perfectly made.

Figure 2 illustrates generally the tubular construction of an arm 20 of suit 10 and particularly illustrates the creation of a seam in accordance with this invention. It contemplates an overlapping region 22 of a first region or thickness 24 of material with a second region or thickness 26 of the same material, an enlarged view of which is illustrated in Figure 3. As stated, the material of suit 10 is formed of an inner layer of Tyvek 28 to which there has been bonded an outer layer of film 30, this film being one which is, of course, bondable to the Tyvek and is generally impervious to such harzardous chemicals as a suit wearer might expect to encounter. As stated above, one such film is polyethylene and another is Saranex, a composite film including an inner layer of polyvinylidene chloride. Regardless of the bondable film employed, it will be on the outside. As is to be noted in the drawings, a Tyvek surface A of edge region 24 is positioned over a mating surface B of film of edge region 26. There are now overlapped areas of film material to Tyvek.

The next step in the process is to selectively apply a heat and pressure influence to the overlapped material, the former being accomplished by ultrasonic radiation. Unfortunately, if one attempts to make a seam closing of a tubular configuration as best illustrated in Figure 2, at present there is no known ultrasonic welding machine that is configured to effect such welding. A general illustration of conventional ultrasonic welder 32 is shown in Figure 5, and it is to be noted that its elements form a closed configuration except for a single opening 34 through which material may be fed. Thus, it is to be seen that a closed circle would not fit around elements of the welding machine and that a seam cannot be constructed which would entail doing this.

To solve the structural problem, and as a feature of this invention, the material is folded as shown in Figure 4 to create a third thickness 33 of the material across overlapped region 22, and as folded, the material is fed through ultrasonic welder 32 as shown in Figure 5. Ultrasonic welder 32 is conventional and employs an ultrasonic generator 36 which generates a sound vibrational signal of approximately 20 KHz at a power of approximately 350 watts which is transmitted upwards by transducer 38 through rotary table 40 supported by shaft 41 and conventional bearing 42. Radiation then passes up through the material of sleeve 20 to be joined by a seam. To accomplish this, the material is moved through welder 32 coordinate with the rotation of wheel 44, driven by motor 46, typically fed by a feed member not shown. Pressure is applied to an upper surface C of thickness 22 by wheel 44 of welder 32, typically formed of metal, and is approximately two inches in diameter and approximately 0.6 inch wide. It has two spaced sets of four rows of raised regions or lands 48, being approximately 0.02 inch in height, 0.12 inch long, and 0.04 inch wide. The length or circumferential spacing between these lands is approximately 0.03 inch and the lateral spacing between rows of them, sets of rows is being 0.04 inch and between rows of lands of a set of rows being 0.02 inch. A variable downward force in the approximate range of 20 to 35 pounds is applied by a spring, diagrammatically illustrated as spring 50, providing an effective force via the lands of 500 to 1,000 PSI as needed for the material used. Two passes of the material are typically made, creating a weld approximately 0.6 inch in width. There is also created an unwanted bond between overlapped or folded thicknesses 26 and 33 in region 22, being a Tyvek-to-Tyvek connection. Fortunately, this latter joint is a weak one, and by pulling on regions of the sleeve back at, say, points X and Y, this latter joint will give way to a state where portions of sleeves 20 are separated, this being illustrated in Figure 6 showing as region 22a the former position of a bond.

Significantly, it is to be seen that if one attempts to stretch the inside of sleeve 20 as shown in either Figures 2, 3 or 6 that the full welded area of the seam 52 resists this force, it extending over the overlapping welded region of approximately 0.6 inch. As a result, the mechanical strength of the seam is tremendous, and it is simply not destroyable by anticipated muscular forces exertable on the inside of the sleeve. This is in contrast to a seam of the arrangement illustrated by Goldstein, wherein, as can be seen from Figure 4, by pulling on members 14 and 16 in opposite directions, one applies essentially all force on an extremely small area of connection, and as it gives, these small areas of stress cause the material to yield and the seam commences giving away. This can occur at levels of force to be anticipated in the ordinary usage of a garment. In any event, the focus of the forces are moved along until a seam finally breaks back to the stitched regions. When this occurs, there is the propensity for leakage through the stitches, a problem long existing where stitched seams have been attempted in protective garments and presently a very real problem where stitches are relied upon for strength of a seam.

Again referring to the construction of a seam as contemplated by this invention, while it might have been thought that to apply spaced increments of pressure as accomplished by the lands 48 of pressure wheel 44 would leave unsealed regions in between, it has been found that to the contrary, the configuration appears to effect a continuous sealing effect not achievable with a continuous pressure wheel. In fact, with a continuous application of pressure (as it appears was employed by Goldstein to a film-to-film joint) to a Tyvek-to-film joint, a breakdown will occur in the structure of the material, this producing voids which actually break through the material. In fact, it may have been such an obstacle that lead to the film-to-film welding employed by Goldstein. Significantly, the mechanical arrangement of the Goldstein seam makes it inherently weak and creates the necessity for adding the stitching step. Clearly the seam constructed in accordance with applicant's invention will provide a more effective seal than employed by the combination of a film-to-film plus a stitching arrangement. On the other hand, where extreme fluid pressures are to be encountered and further assurances sought as to the integrity of the seam, it is possible to further reinforce one of applicant's seams. Thus, Figure 7 illustrates the application of a strip of thickness 54 of protective material, e.g., bondable film, applied over a seam 50 between end regions or thicknesses 24 and 26, this strip typically being of a film such as Saranex.

Figure 8 illustrates a strip 56 positioned on the inside of a seam, and in this case, it typically would be a strip of film-coated Tyvek. In the latter case, there would thus be three thicknesses of material.

From the foregoing, it is to be well appreciated that the applicant has provided a major step forward in the construction of safe protective garments which provide an increased margin of safety for the wearer which it is believed will play a major role in enhancing capabilities in safely working in hazardous environments as, for example, those created by toxic chemicals.

## Claims

1. A method of making protective garments or parts thereof from fabric comprising a first layer laminated on one side thereof to a second layer, the first and second layers being bondable together by the application of ultrasonic waves, said method comprising:

   a. overlapping edges of pieces of said fabric to be bonded together so that a surface of a first layer of one piece of said fabric is in contact with a surface of a second layer of another piece of said fabric in the area of said overlap; and

   b. bonding said pieces of fabric together in the area of the said overlap by applying pressure at spaced intervals and ultrasonic waves continuously whereby the combination of adjacent conditions of applied heat and pressure, and heat only, is effected along said overlap.

2. A method according to Claim 1 in which, the first layer bonds weakly or is non-bondable to another similar layer by the application of ultrasonic waves, wherein prior to bonding one of said pieces of said fabric is folded around the edge of the other piece of said fabric back past the area of said overlap in such manner that a surface of a layer of the folded portion of the fabric is in contact with a surface of a similar of one of the overlapping pieces of said fabric so that the layers are unbonded or only weakly bonded to one another.

3. A method according to Claim 2, wherein the portion of the fabric which was folded is separated from contact with the end of the piece of the fabric around which it was folded after bonding.

4. A method according to any of Claims 1 to 3 wherein the bonding is accomplished with an ultrasonic sealing machine.

5. A method according to any of Claims 1 to 4 wherein the first layer is a non-woven fibrous layer, preferably a spun bonded layer.

6. A method according to Claim 5 in which the fibrous layer comprises polyolefin fibres especially polyethylene fibres.

7. A method according to any of Claims 1 to 8 in which the second layer is a film of polyolefin, especially of polyethylene, or polyvinylidene chloride.

8. A protective garment comprising:
body material formed of bonded layers including as a first and inner layer a spun bonded olefin and as a second and outer layer a bondable film from the group of films wherein one film includes polyethylene and the other film includes polyvinylidene chloride;

an inner surface, surface A, of said material being a surface of said spun bonded olefin and the outer surface, surface B, of said material being a surface of said bondable film; and

at least one seam between portions of said body material, said seam being formed by overlapping edge regions of said material, a surface A of one edge region forming a first thickness of material, lying flat against a surface B of another edge region forming a second thickness of material and applying ultrasonic energy through the resulting overlapping edge regions of said first and second thicknesses of material and simultaneously applying pressure to said overlapped edge region, said pressure being applied at predetermined spaced intervals on serially spaced areas along the said overlapped edge region of said material wherein the combination of adjacent conditions of applied heat and pressure, and heat only, is effected in said region and a continuous seal is effected.

9. A protective garment according to Claim 8 wherein a third thickness of said elongated portion of said material is folded to effect in place three thicknesses of said material before bonding and wherein surface A of the third thickness faces a surface A of said other side edge region, then said heat and pressure are applied through the three thicknesses, permanent bonding being effected between said surface A of one side region of said elongated portion and said surface B of said other side region of said elongated portion, and ineffectual, disconnectible, bonding occurs between surface A of said third thickness of material and surface A of said other side edge region of a said second thickness of material.

10. A protective garment according to Claim 8 or 9 further comprising a strip of material including a bondable film, and said strip being positioned as an added thickness over and overlapping the intersection of said first and second thicknesses of material.

11. A protective garment according to Claim 8, 9 or 10 wherein said film comprises an inner layer of polyvinylidene chloride.

**Patentansprüche**

1. Verfahren zur Herstellung von Schutzbekleidung oder Teilen davon aus Gewebe mit einer ersten Schicht oder Lage, die an der einen Seite auf eine zweite Lage aufkaschiert ist, wobei erste und zweite Lage durch Beaufschlagung mit Ultraschallwellen miteinander verbindbar bzw. verschweißbar sind, gekennzeichnet durch:

a) Überlappen der Ränder von miteinander zu verbindenden Stücken des Gewebes in der Weise, daß die Oberfläche einer ersten Lage eines Gewebestücks mit einer Oberfläche einer zweiten Lage eines anderen Gewebestücks im Überlappungsbereich in Berührung steht, und

b) Verbinden (oder Verschweißen) der Gewebestücke miteinander im Überlappungsbereich durch Ausübung von Druck an beabstandeten Stellen und kontinuierliche Beaufschlagung mit Ultraschallwellen, wodurch die Kombination benachbarter oder angrenzender Bedingungen von ausgeübtem Druck und angelegter Wärme, sowie nur Wärme, längs der Überlappung herbeigeführt wird.

2. Verfahren nach Anspruch 1, bei dem die erste Lage nur schwach oder (gar) nicht mit einer anderen, ähnlichen Lage durch Beaufschlagung mit Ultraschallwellen verbindbar (bzw. verschweißbar) ist, dadurch gekennzeichnet, daß vor dem Verbinden (bzw. Verschweißen) eines der Gewebestücke um den Rand des anderen Gewebestücks über den Überlappungsbereich in der Weise zurückgefaltet wird, daß eine Oberfläche einer Lage des Faltabschnitts des Gewebes in Berührung mit einer Oberfläche eines ähnlichen der (einander) überlappenden Gewebestücke steht, so daß die Lagen nicht oder nur schwach miteinander verbunden (bzw. verschweißt) sind oder werden.

3. Verfahren nach Anspruch 2, dadurch gekennzeichnet, daß der Abschnitt des Gewebes, der umgefaltet worden ist, nach dem Verbinden (bzw. Verschweißen) aus der Berührung mit dem Ende des Gewebestücks, um das er herumgefaltet worden ist, getrennt wird.

4. Verfahren nach einem der Ansprüche 1 bis 3, dadurch gekennzeichnet, daß das Verbinden (bzw. Verschweißen) mittels einer Ultraschall-Schweißmaschine ausgeführt wird.

5. Verfahren nach einem der Ansprüche 1 bis 4, dadurch gekennzeichnet, daß die erste Lage eine nicht-gewebte bzw. Vlies-Faserlage, bevorzugt eine Spinnvlieslage ist.

6. Verfahren nach Anspruch 5, dadurch gekennzeichnet, daß die Faserlage aus Polyolefinfasern, insbesondere Polyethylenfasern besteht.

7. Verfahren nach einem der Ansprüche 1 bis 8, dadurch gekennzeichnet, daß die zweite Lage ein Film bzw. eine Folie aus Polyolefin, insbesondere aus Polyethylen, oder Polyvinylidenchlorid ist.

8. Schutzbekleidung, umfassend:

ein Körpermaterial aus verbundenen (bzw. verschweißten) Lagen, die als erste und innere Lage ein spinnvliesgebundenes Olefin und als zweite und äußere Lage eine(n) verbindbare(n) (bzw. verschweißbare(n)) Film oder Folie aus der Gruppe von Filmen oder Folien, von denen der (die) eine Film oder Folie Polyethylen und der (die) andere Film oder Folie Polyvinylidenchlorid enthält, aufweisen, wobei eine Innenfläche, Fläche A, des Materials eine Oberfläche aus dem spinnvliesgebundenen Olefin und die Außenfläche, Fläche B, des Materials eine Oberfläche des (der) verbindbaren (bzw. verschweißbaren) Films oder Folie sind, und

mindestens einen Saum zwischen Abschnitten des Körpermaterials, wobei der Saum gebildet ist durch Überlappen von Randbereichen des Materials, wobei eine Fläche A des einen Randbereichs eine erste Dickenschicht des Materials bildet und flach an einer eine zweite Dickenschicht des Materials bildenden Fläche B eines anderen Randbereichs anliegt, und (durch) Beaufschlagen mit Ultraschallenergie durch die resultierenden überlappten Randbereiche der ersten und zweiten Dickenschichten des Materials und gleichzeitige Ausübung von Druck auf den überlappenden Randbereich, wobei der Druck in vorbestimmten Abständen an in Reihe beabstandeten Stellen längs des überlappten Randbereichs des Materials ausgeübt wird, so daß die Kombination benachbarter oder angrenzender Bedingungen von angelegter Wärme und ausgeübtem Druck, sowie nur Wärme, in diesem Bereich herbeigeführt und eine fortlaufende Verschweißung erreicht wird.

9. Schutzbekleidung nach Anspruch 8, dadurch gekennzeichnet, daß vor dem Verbinden (bzw. Verschweißen) eine dritte Dickenschicht des langgestreckten Abschnitts des Materials umgefaltet wird, um an der Stelle drei Dickenschichten des Materials festzulegen, und daß die Fläche A der dritten Dickenschicht der Fläche A des anderen Seitenrandbereichs zugewandt ist, sodann durch die drei Dickenschichten hindurch eine Wärme- und Druckbeaufschlagung erfolgt, eine dauerhafte Verbindung (bzw. Verschweißung) zwischen der Fläche A des einen Seitenbereichs des langgestreckten Abschnitts und der Fläche B des anderen Seitenbereichs des langgestreckten Abschnitts herbeigeführt wird, und eine ineffektive, (auf)trennbare Verbindung (bzw. Verschweißung) zwischen der Fläche A der dritten Dickenschicht des Materials und der Fläche A des anderen Seitenrandbereichs der zweiten Dickenschicht des Materials auftritt.

10. Schutzbekleidung nach Anspruch 8 oder 9, gekennzeichnet durch einen Streifen des Materials mit einem verbindbaren (bzw. verschweißbaren) Film, wobei der Streifen als zusätzliche Dickenschicht über der Überschneidung der ersten und zweiten Dickenschichten des Materials und unter Überlappung derselben angeordnet ist.

11. Schutzbekleidung nach Anspruch 8, 9 oder 10, dadurch gekennzeichnet, daß der Film eine Innenlage aus Polyvinylidenchlorid aufweist.

**Revendications**

1. Procédé de fabrication de vêtements de protection ou de parties de ceux-ci, à partir d'un tissu comprenant une première couche recouverte sur l'une de ses faces par une seconde couche, les première et seconde couches pouvant être liées l'une à l'autre par l'application d'ondes ultrasonores, ledit procédé consistant à:

a) superposer les bords des pièces dudit tissu destinées à être liées ensemble, de façon qu'une face d'une première couche d'une pièce dudit tissu soit en contact avec une face d'une seconde couche d'une autre pièce dudit tissu dans la zone de ladite superposition, et

b) lier lesdites pièces de tissu ensemble dans la zone de ladite superposition en appliquant une pression à des intervalles espacés et des ondes ultrasonores de façon continue au moyen desquelles une combinaison de conditions voisines d'application de chaleur et de pression, et de chaleur uniquement est effectuée le long de ladite superposition.

2. Procédé selon la revendication 1, caractérisé en ce que la première couche est liée faiblement ou n'est pas liable à l'autre couche similaire par l'application d'ondes ultrasonores, en ce qu'avant la liaison, l'une desdites pièces dudit tissu est repliée autour du bord de l'autre pièce dudit tissu vers l'arrière après la zone de ladite superposition, de sorte qu'une face d'une couche de la partie repliée de tissu soit en contact avec une face similaire d'une des parties superposées dudit tissu de façon que les couches ne soient pas liées l'une à l'autre ou seulement faiblement liées.

3. Procédé selon la revendication 2, caractérisé en ce que la partie de tissu qui a été repliée, est maintenue sans contact avec l'extrémité de la pièce de tissu autour de laquelle elle a été repliée après la liaison.

4. Procédé selon l'une quelconque des revendications 1 à 3, caractérisé en ce que la liaison est réalisée avec une machine de soudage par ultrasons.

5. Procédé selon l'une quelconque des revendications 1 à 4, caractérisé en ce que la première couche est une couche de fibres non tissées, de préférence une couche à nappe non tissée.

6. Procédé selon la revendication 5, caractérisé en ce que la couche de fibres comprend des fibres en polyoléfines, plus spécialement des fibres de polyéthylène.

7. Procédé selon l'une quelconque des revendications 1 à 6, caractérisé en ce que la seconde couche est un film de polyoléfine, plus spécialement de polyéthylène, ou de chlorure de polyvinylidene.

8. Vêtement de protection caractérisé en ce qu'il comprend:

un matériau opaque formée de couches liées comprenant comme première couche interne une oléfine non tissée et comme seconde couche externe un film liable du groupe des films dans lequel un film comprend le polyéthylène et l'autre film le chlorure de polyvinylidene,

une face interne, face A, dudit matériau étant une face de ladite oléfine non tissée et la face extérieure, face B, dudit matériau étant une face dudit film pouvant être lié, et

— au moins une soudure entre les parties dudit matériau opaque, ladite soudure étant formée par superposition des régions de bord dudit matériau, une face A de l'une des régions de bord formant une première épaisseur de matériau, se trouvant à plat contre une face B de l'autre région de bord formant une seconde épaisseur de matériau, et par application d'énergie ultrasonore à travers la superposition obtenue des régions de bord desdites première et seconde épaisseur de matériau et par application simultanée d'une pression à ladite région de bord superposée, ladite pression étant appliquée, à des intervalles espacés prédéterminés, sur des zones espacées en séries le long de ladite région de bord superposée dudit matériau, la combinaison des conditions voisines d'application de chaleur et de pression, et de chaleur uniquement, étant effectuée dans ladite région et un scellement continu étant ainsi effectué.

9. Vêtement de protection selon la revendication 8 caractérisé en ce qu'une troisième épaisseur de ladite partie étirée dudit matériau est repliée pour mettre en place trois épaisseurs dudit matériau avant la liaison, et en ce que la face de la troisième épaisseur est en vis à vis d'une face A de ladite autre région de bord latéral, alors lesdites conditions de chaleur et pression sont appliquées à travers les trois épaisseurs, une liaison permanente étant établie entre ladite face A de l'une des régions latérales de ladite partie étirée et ladite face B de ladite autre région latérale de ladite partie étirée, et une liaison inefficace et détachable étant établie entre la face A de ladite troisième épaisseur de matériau et la face A de ladite autre région de bord latérale d'une dite seconde épaisseur de matériau.

10. Vêtement de protection selon la revendication 8 ou 9, caractérisé en ce qu'il comprend en outre une bande de matériau comprenant un film pouvant être lié, et ladite bande étant placée comme une épaisseur supplémentaire au-dessus de, et superposée sur l'intersection desdites première et seconde épaisseurs de matériau.

11. Vêtement de protection selon la revendication 8, 9 ou 10, caractérisé en ce que ledit film comprend une couche interne de chlorure de polyvinylidene.

FIG 1

FIG.2

FIG.5a

FIG.8

FIG.7

FIG.5

EP 0 199 472 B1

FIG.3

FIG. 4

FIG. 6